# EUROPEAN PATENT APPLICATION

(11) **EP 1 635 443 A1**
(43) Date of publication of application: **15.03.2006**
(21) Application number: 04077526.4
(22) Date of filing: 10.09.2004
(51) Int. Cl.: H02K 41/03, B65G 54/02, B60L 13/03

(54) **Modular track and guide sections for a linear motor**

(71) Applicant: Motor Operate Systems B.V., 9411 VR Beilen (NL)
(72) Inventor: Hakvoort, Marcus Bernardus Johannes, 7705 PH Drogteropslagen (NL)
(74) Representative: van Westenbrugge, Andries

(57) **Abstract**

Linear motor consisting of a stationary part with electromagnetic coils accommodated in a U-shaped section. The movable part with permanent magnets is accommodated inside the U-shaped section and provided with bearing wheels that bear on the arms and base, respectively, of the U section. The U section is provided at the top with sealing means in order to provide a dust-tight housing for the moveable part.

## Description

The present invention relates to a linear motor comprising a stationary part provided with electromagnetic coils and a movable part provided with a device interacting with said coils and generating an electromagnetic field, wherein the stationary part is provided with a guide for said movable part, said guide having seats for accommodating wheels arranged on either side of said device.

Such a linear motor is disclosed in WO 02/27900. In this publication a construction is described that consists of a number of sections that have to be arranged on a separate supporting construction. One aim of the present invention is to make a linear motor more compact, less expensive, more stable and more lightweight.

This aim is realised with a linear motor as described above in that said stationary part comprises a compound section that is (self-)supporting.

The basic concept is based on making use of a compound (for example produced by shearing and forming operations) or rolled or extruded section of any nature, shape, length or type of material suitable for this whatsoever, in which and/or through which a so-called translator (transport carriage, lifting device or support provided with permanent magnets) is able to move or can be guided on command. The sections can easily be infinitely coupled and/or clicked together in any form whatsoever. That is to say, the section according to the present invention is a complete construction that, on the one hand, can be joined directly to the surroundings without special structural measures being needed for this and where, on the other hand, the movable part can be fitted therein/thereon without further structural operations being needed. The stationary part can optionally be fitted separately during the installation, but the positioning of the stationary part is unambiguously determined by means of facilities such as grooves or raised edges, as a result of which complex adjustment operations are dispensed with. Preferably, there are separate tracks in the section for accommodating separate rollers/wheels for the movable part. These wheels are preferably perpendicular to one another. The construction is made such that the movable part, with the rollers/wheels described above, can be fitted in the compound section without radical adjustment operations and thus all-round enclosure of the movable part with respect to the stationary part takes place, except, of course, in the linear direction in which the motor operates. Preferably, the enclosure of the movable part in the stationary part is such that dust and the like are not able to penetrate into the space delimited inside the section in which the movable part has been fitted. That is to say, the section according to the invention also serves as enclosing housing for the movable part, the housing, of course, being provided with a slot or the like through which a portion of the movable part can extend.

One of the most important main points on which the concept is based is also to make use of a compound (for example produced by shearing and forming operations) or rolled or extruded section of any nature, shape, length or type of material suitable for this whatsoever, in which and/or on which the permanent magnets and/or components generating a magnetic field are located and together with the so-called translator form the entirety of the linear motor. As a result the translator is variable in length and in fact can be made and/or supplied as an endless part. Preferably, the compound section consists of an extruded section that is provided with a centring construction for the stationary electromagnetic coils, tracks for the various rollers/wheels and accommodation for cables and the like. Preferably this extruded section is in one piece. More particularly, this extruded section is made of an aluminium material.

It is, however, also possible to build up the compound section from a number of plate sections and to join these to one another by welding and flanging, as a result of which a positive unit is produced.

Likewise it is possible to build up the compound section from two section halves and to connect these at the stationary part generating the magnetic field. After all, the support for the magnetic coils will be relatively rigid and it is possible to connect the two section halves to one another in an effective manner using this.

The stators (coils and/or magnetic field generator) are mounted in line on or in said section on and/or along specially marked lines and/or grooves. As a result the alignment of the components of the linear motor (stators and translators) is guaranteed in the correct manner. Guiding of the roller wheels in the vertical and/or horizontal direction is guaranteed in a simple manner by the profiling. An extruded section made of a type of steel or, for example, aluminium is preferred. The dimensional stability and continuity of an extruded section in combination with the shaping and possibility for fitting a wide variety of quick-fit or click connectors or sections for detectors, cabling, cold bridge breaks, dust seals, etc. creates an appreciable improvement. The vertical running wheels are of a large diameter (120 - 280 mm) with as wide as possible a running surface so as to produce a high bearing capacity and a lower circumferential speed or fewer revolutions per moved/running metre of the translator. The running wheels are also vulcanised with a plastic that is wear-resistant but runs silently. The horizontal running, pilot and tracking wheels are also of large diameter (70 - 120 mm) with as wide as possible a running surface, the aim of this being the same as that for the vertical running wheels.

The track, rail, i.e. guide section is also suitable for accommodating the requisite cabling in the length of the section, both for supplying voltage and/or current and the cabling required for detectors to be mounted and/or snugly fitted as desired.

By means of the presence of additional co-formed and/or extruded fingers/lips and/or grooves, the track, rail or guide section can easily be provided with a length and/or position measurement system based on, for example, existing rack, tooth-feeler, hole strip, hole/barcode, laser technology, etc.

The track, rail, i.e. guide section can also be used as a self-supporting assembly. The section can thus also be used as support or suspender with the linear motor integrated therein. The track, rail, i.e. guide section can be used lying flat and/or sideways, upright, suspended, radially and diagonally with the linear motor integrated therein, optionally clamped between and/or on and/or to an additional beam and/or support made of any type of material whatsoever.

Because there is the option with the track, rail, i.e. guide section to supply the whole as a closed system, complete with an integrated linear motor therein, there can be said to be a dust-tight housing. The corollary of this is that attraction of metal particles from the surroundings by the strong permanent magnets is thus virtually completely prevented. This risk is also made much smaller by working with an extruded aluminium section.

By providing the track, rail or guide section with this closed characteristic it is no longer necessary to embed the stators or components generating a magnetic field (for example coils); this is associated with a substantial saving in costs. Personal safety is appreciably better guaranteed by this means.

As a result of the closed system it is also easy to cool or to ventilate the system.

In the description and claims the closed system is referred to at various points by U-shaped or upturned U-shaped. It will be understood that this relates to orientations in specific positions which can be different depending on the use.

An extractor or ventilator can be fitted to, for example, the end faces of the track, rail or closed guide section. The warm air liberated can also be re-used in a recovery or recycling system.

The track, rail, i.e. guide section, but also the compound (for example produced by shearing and forming operations) or rolled or extruded section for the translator is made up to a variable length on a project basis. The length is determined by the market segment or application for which it is used. The required specific characteristics with regard to force, power, etc. also have an influence on the length of the translator section. The stators together with the translator, i.e. the linear motor, are thus integrated in the track, rail, i.e. guide section. The linear motor with the track, rail and/or guide and translator section together form a quick-fit component.

The track, rail and/or guide section can, for example easily be bolted or welded to or on, for example, a steel structure and/or embedded in the foundations or supporting construction of a structural whole.

The production, assembly and fitting of the section in practice is appreciably shortened as a result. The section provided with stators, cabling, detectors and optionally a translator can also already be tested in the factory before delivery.

From the logistics or transport technology standpoint the complete system is thus easier to handle and easier to stack. The risk of damage in the subsequent handling route is appreciably reduced.

### Explanation

In the explanation of this invention and/or this patent a choice has been made to take an aluminium extruded section contained between two steel uprights or supports as an example.

However, the invention and/or this patent is in no way restricted to the embodiments described as an example and shown in the drawing, but such embodiments can be implemented in a wide variety of methods, work sequences, procedures, shapes, lengths and/or dimensions, types of material without going beyond the scope of the invention.

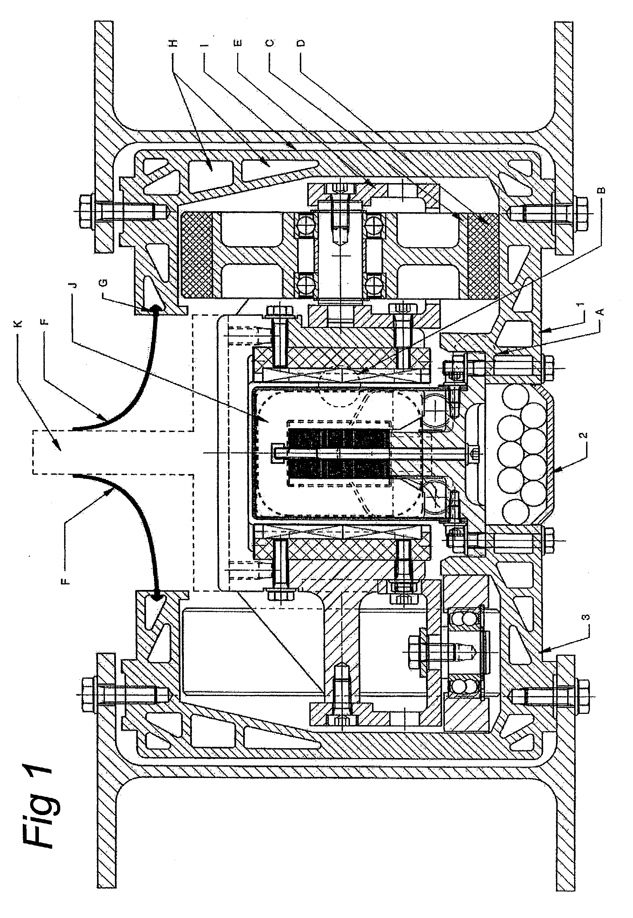

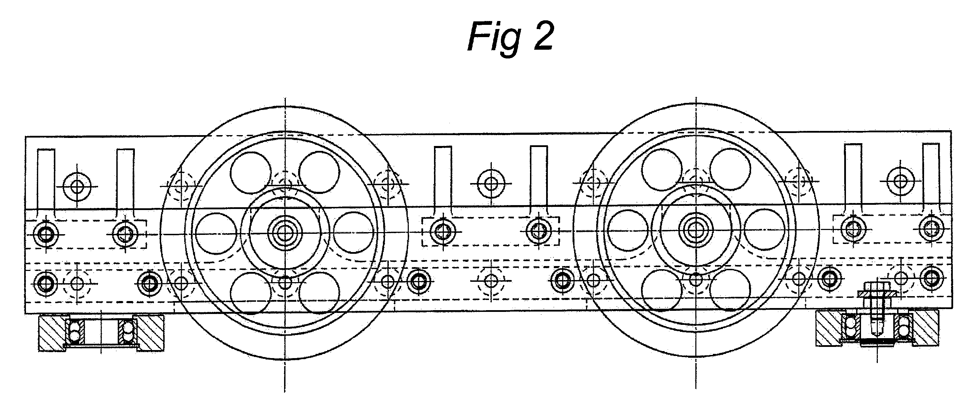

The aluminium extruded section taken as an example is made up of several parts (parts 1 to 3). Part 1 of the section is the mirror image of part 3. Part 2 is intended as a spacer and snap-fit section for housing cabling for, for example, controlling the stators and/or components generating a magnetic field. In the heart of the compound track, rail and/or guide section for the linear motor the stators and/or components generating a magnetic field are mounted against a raised edge (A in Fig. 1) and/or groove. This is done on two sides; as a result the alignment and the mounting of the stators and/or components generating a magnetic field in the correct position is easily guaranteed. In this example (Fig. 1) fixing is effected by means of a bolt/nut joint. The requisite air gap (B in Fig. 1) between the permanent magnets of the translator and the stators is guaranteed by this means. The track, rail and/or guide section continues this. The large, vertically positioned running wheels (C in Fig. 1) are attached to a so-called separate slide section (E in Fig. 1). This creates the possibility for being able to adjust the various components subsequently and, moreover, being able to replace these easily. Matching of the running wheel diameter to the required carrying capacity and/or lifting or suspending capacity for a required application is also simplified as a result. After all, the slide section contains the two large vertical running wheels, but also the two horizontal running, pilot and tracking wheels. There is an eccentric clamping facility for these horizontal wheels so as to be able to adjust and/or align this setting as well. The slide section is mounted both on the left-hand side and on the right-hand side of the translator. The vertical and horizontal running wheels are all provided with vulcanised plastic that is wear-resistant but runs silently (D in Fig. 1).

The extruded aluminium section shown as an example in Fig. 1 has a variable length. This is determined by the application and/or the market segment in which the linear motor is sold. By providing a facility (G in Fig. 1) at the top, i.e. open, side of the track, rail and/or guide section (Fig. 1) for the fixing of and/or the ability to fit, for example, two rubber flaps (F in Fig. 1), a closed track, rail and/or guide section is created. A driver (K in Fig. 1) or point of attachment will be visible only at the location of the translator of the linear motor. All other locations in the section are closed in the longitudinal direction. The linear motor can be cooled with air by ventilating and/or extracting at the front of the track, rail and/or guide section. Furthermore, this system can also be used for recovery of heat from the air heated by the linear motor. Because the track, rail and/or guide section is closed, the linear motor can also be simplified with regard to the necessary personal safety. Embedding of the stators and/or the components generating a magnetic field (J in Fig. 1) can be dispensed with. This saves appreciable costs.

Parts 1 to 3 in Fig. 1 can also serve independently as self-supporting beam, support and/or rail. Finally, the present invention is in no way restricted to the embodiments described as an example and shown in the drawing, but such embodiments can be implemented in a wide variety of shapes and dimensions without going beyond the scope of the invention.

The sizing used is unrestricted. The system is universal and, moreover, modular to such an extent that it can easily be expanded and/or provided with one or more options.

As a result of its modular construction, the system can also easily be combined with the Netherlands patent, number 1016282, International PCT Application No. PCT/01/00681 ("Transport System") respectively.

## Claims

1. Linear motor comprising a stationary part provided with electromagnetic coils and a movable part provided with a device interacting with said coils and generating an electromagnetic field and wheels, wherein the stationary part is provided with a guide for said movable part, said guide having seats for accommodating wheels arranged on either side of said device, **characterised in that** said stationary part comprises a compound section that is (self-)supporting.

2. Linear motor according to Claim 1, wherein said compound section comprises an extruded section.

3. Linear motor according to one of the preceding Claims, wherein said compound section comprises a steel section.

4. Linear motor according to one of the preceding Claims, wherein said wheels comprise vertical wheels with a diameter between 120 and 280 mm.

5. Linear motor according to one of the preceding Claims, wherein said wheels comprise tracking wheels.

6. Linear motor according to one of the preceding Claims, wherein said compound section is designed to accommodate cabling for said coils.

7. Linear motor according to one of the preceding Claims, wherein said compound section is provided with references for determining the position of said movable part.

8. Linear motor according to one of the preceding Claims, wherein said compound section is a U-shaped section provided with centring means for accommodating the device generating an electromagnetic field in an unambiguous position, which device generating an electromagnetic field extends from the base of the U-shaped section, wherein the movable part is fitted inside said U-shaped section and surrounds the device generating an electromagnetic field on three sides.

9. Linear motor according to Claim 8, wherein the movable part comprises an upturned U-shaped part that surrounds the device generating an electromagnetic field.

10. Linear motor according to Claim 8 or 9, wherein the base of the U and each of the arms form a track for rollers/wheels fitted on the moveable part.

11. Linear motor according to one of Claims 9 - 10, wherein the free ends of the U-shaped section are provided with sealing means oriented towards one another.

12. Linear motor according to one of Claims 9 - 11, wherein cooling means operating in said U-shaped section are fitted.

13. Linear motor according to one of the preceding Claims, wherein said compound section has coupling means for connecting to a further compound section.
